# NOUVEAU FASCICULE DE BREVET EUROPEEN

(11) **EP 1 595 085 B2**
(45) Date de publication et mention de la décision concernant l'opposition: **17.11.2010**
(45) Mention de la délivrance du brevet: 19.09.2007
(21) Numéro de dépôt: 04711395.6
(22) Date de dépôt: 16.02.2004
(51) Int. Cl.: F16D 25/08, F16D 21/06

(54) **DISPOSITIF DE TRANSMISSION DE COUPLE POUR VEHICULE AUTOMOBILE**
DREHMOMENTÜBERTRAGUNGSVOR- RICHTUNG FÜR EIN KRAFTFAHRZEUG
TORQUE TRANSMISSION DEVICE FOR A MOTOR VEHICLE

(30) Priorité: 20.02.2003 FR 0302120
(43) Date de publication de la demande: 16.11.2005
(73) Titulaire: Valeo Embrayages, 80009 Amiens Cedex 1 (FR)
(72) Inventeur: THOMIRE, Sylvain, F-80000 AMIENS (FR); TERMENON, Norbert, F-80000 AMIENS (FR); THERY, Pascal, F-80000 AMIENS (FR)
(74) Mandataire: Ramey, Daniel
(86) Numéro de dépôt international: PCT/FR2004/050061
(87) Numéro de publication internationale: WO 2004/076883

(56) Documents cités:
- EP-A1- 0 185 176
- EP-A2- 1 134 447
- EP-B1- 0 742 378
- EP-B1- 0 992 700
- WO-A-91/17371
- DE-A- 838 094
- DE-A- 10 102 300
- DE-A1- 3 024 196
- DE-A1- 10 012 807
- DE-A1- 10 155 458
- DE-A1- 19 905 373
- DE-A1- 19 941 837
- FR-A- 2 808 851
- FR-A- 2 816 908
- JP-A- 04 302 715
- JP-A- 2001 263 371
- US-A- 3 317 013
- US-A- 3 753 478
- US-A- 5 927 418

## Description

L'invention concerne un dispositif de transmission de couple en particulier pour véhicule automobile, du type comprenant au moins un embrayage monté entre un arbre moteur et un arbre mené, tel par exemple que l'arbre d'entrée d'une boîte de vitesses, et des moyens d'actionnement de l'embrayage comprenant un vérin hydraulique

Dans un dispositif de ce type, les moyens d'actionnement de l'embrayage peuvent être commandés en déplacement ou en pression de liquide hydraulique. La commande en pression est a priori plus simple car il suffit de moduler la pression hydraulique d'alimentation du vérin pour moduler le fonctionnement, c'est-à-dire le serrage, de l'embrayage. Toutefois, des difficultés peuvent être rencontrées au début de l'actionnement car la commande de l'embrayage à partir d'une pression hydraulique nulle n'est pas linéaire en raison du rattrapage du jeu et des courses mortes et de la mise en contrainte du dispositif. Il est donc difficile de réaliser une commande fine et progressive du début de l'actionnement de l'embrayage dans ces conditions.

L'invention a notamment pour but d'apporter une solution simple, efficace et économique à ce problème.

Elle propose à cet effet un dispositif de transmission de couple pour véhicule automobile, conforme à la revendication 1.

Dans le dispositif selon l'invention, l'augmentation de la pression de commande du vérin hydraulique à partir d'une valeur nulle n'a aucun effet sur les moyens d'actionnement de l'embrayage, mais permet d'annuler les jeux et de rattraper les courses mortes, ainsi que de mettre le dispositif en contrainte. Dès que la pression de commande du vérin hydraulique est supérieure à la valeur seuil précitée, l'actionnement de l'embrayage commence et il est alors possible de commander progressivement et de façon très fine le fonctionnement de l'embrayage par une variation correspondante de la pression de commande, la loi de commande de l'embrayage étant alors à peu près linéaire.

De préférence, le vérin agit sur l'embrayage par l'intermédiaire d'une butée d'embrayage ou de moyens mécaniques de transformation de mouvement comprenant une butée d'embrayage.

Selon une autre caractéristique de l'invention, les moyens de compensation de pression sont des moyens élastiques.

Cela permet notamment de réaliser cette compensation de pression de façon particulièrement simple et économique.

Dans un premier mode de réalisation de l'invention, les moyens de compensation comprennent un ressort porté par le vérin précité et s'opposant à l'action de ce vérin sur l'embrayage.

Avantageusement, ce ressort est monté entre le cylindre et le piston du vérin hydraulique et s'oppose au déplacement du piston dans le cylindre par la pression de commande, tant que celle-ci reste inférieure à la valeur seuil précitée.

Dans un autre mode de réalisation de l'invention, l'embrayage comprend un diaphragme annulaire d'un type classique, qui agit sur le piston du vérin et qui forme lesdits moyens de compensation de pression.

Dans un autre mode de réalisation de l'invention, l'embrayage comprend un plateau de pression coopérant avec un disque de friction, et des moyens à ressort de rappel du plateau de pression dans une position de repos ou position inactive, ces moyens à ressort faisant partie des moyens précités de compensation de pression.

Ces moyens à ressort comprennent par exemple une rondelle Belleville montée entre le plateau de pression et un élément fixe tel par exemple que le couvercle de l'embrayage ou bien des languettes circonférencielles ou tangentielles élastiquement déformables de rappel du plateau de pression dans une position de repos ou position inactive.

Avantageusement, lorsque les moyens de compensation de pression sont formés par un diaphragme annulaire ou par une rondelle Belleville, la courbe de charge du diaphragme annulaire ou de la rondelle Belleville est peu ensellée. L'effort développé par ce diaphragme annulaire ou cette rondelle Belleville ou par les autres moyens de compensation de pression est de préférence continûment croissant avec la course du piston du vérin depuis la position de repos de l'embrayage.

Selon une autre caractéristique de l'invention, ce dispositif comprend des moyens de détection du déplacement du piston du vérin hydraulique précité, ces moyens de détection étant par exemple du type inductif et comprenant une bobine portée par le cylindre du vérin et un élément inductif porté par le piston du vérin ainsi que des moyens de mesure d'un courant électrique passant dans la bobine.

Ces moyens permettent de suivre le déplacement du piston du vérin hydraulique résultant des variations de la pression hydraulique de commande de ce vérin.

Dans une forme de réalisation particulière de l'invention, le vérin est annulaire et comprend deux parois cylindriques coaxiales de diamètre différent qui s'étendent autour de l'arbre mené et entre lesquelles est monté le piston du vérin, ce piston étant guidé en translation sur la paroi cylindrique interne du vérin et étant avantageusement prolongé axialement par un élément rapporté guidé sur cette paroi cylindrique interne et comportant des joints d'étanchéité qui sont montés sur cet élément rapport ou entre celui-ci et le piston.

Les joints d'étanchéité sont du type en U ou à lèvres pour réaliser une étanchéité dynamique.

Selon encore une autre caractéristique du dispositif selon l'invention, un palier formant butée axiale de reprise d'effort est monté sur le vérin, entre celui-ci et un couvercle de l'embrayage précité.

Ainsi, les efforts d'actionnement de l'embrayage résultant de la commande du vérin hydraulique ne sont plus transmis à l'arbre moteur et à ses paliers, mais sont supportés par le palier monté sur le vérin hydraulique et sur lequel s'appuie le couvercle d'embrayage.

Dans une forme particulièrement intéressante de l'invention, le dispositif comprend deux embrayages montés en parallèle entre un volant d'inertie entraîné en rotation par l'arbre moteur et deux arbres menés coaxiaux formant les arbres d'entrée d'une boîte de vitesses robotisée, les deux embrayages étant du type précité et étant actionnés par des vérins hydrauliques commandés en pression, le dispositif comprenant des moyens de compensation de pression du type précité qui sont associés à chaque embrayage et à chaque vérin de commande.

Le volant d'inertie précité est avantageusement un volant flexible.

Dans une variante, le dispositif comprend un double volant amortisseur dont le volant d'inertie primaire est solidaire de l'arbre moteur et dont le volant secondaire est le volant d'inertie précité relié par les embrayages aux arbres menés.

Dans ce cas, le volant d'inertie primaire peut être flexible.

Les deux vérins hydrauliques de commande des deux embrayages peuvent être coaxiaux et agencés l'un à l'intérieur de l'autre autour des arbres menés. Ils forment avantageusement dans ce cas un ensemble unitaire monté flottant ou centré sur le carter de la boîte de vitesses.

Dans une variante de réalisation, ces deux vérins peuvent comprendre un premier vérin annulaire traversé axialement par les arbres menés et comportant une bride annulaire qui supporte un second vérin parallèle au premier vérin et une fourchette articulée au moyen d'une rotule sur la bride annulaire, cette fourchette étant associée au piston du second vérin et agissant sur des moyens d'actionnement de l'un des deux embrayages.

Les embrayages peuvent quant à eux être du type comportant deux plateaux de pression et deux plateaux de réaction, le plateau de pression d'un embrayage étant par exemple en appui dans sa position de repos sur le plateau de réaction de l'autre embrayage, ou bien ces embrayages peuvent comprendre un unique plateau de réaction qui est commun aux deux embrayages et deux plateaux de pression qui sont disposés de part et d'autre du plateau de réaction.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique partielle en coupe axiale du dispositif selon l'invention ;
- la figure 2 est une demi-vue schématique en coupe axiale d'une variante de réalisation de ce dispositif ;
- la figure 3 est une vue schématique partielle en coupe axiale, à plus grande échelle, d'une autre variante de réalisation du dispositif selon l'invention ;
- la figure 4 est une vue schématique partielle en coupe axiale d'encore une autre variante de réalisation du dispositif selon l'invention ;
- la figure 5 est une vue schématique partielle en coupe axiale représentant des moyens de détection des déplacements des pistons des vérins hydrauliques des embrayages ;
- la figure 6 est une vue schématique en coupe axiale d'une autre variante de réalisation du dispositif selon l'invention.

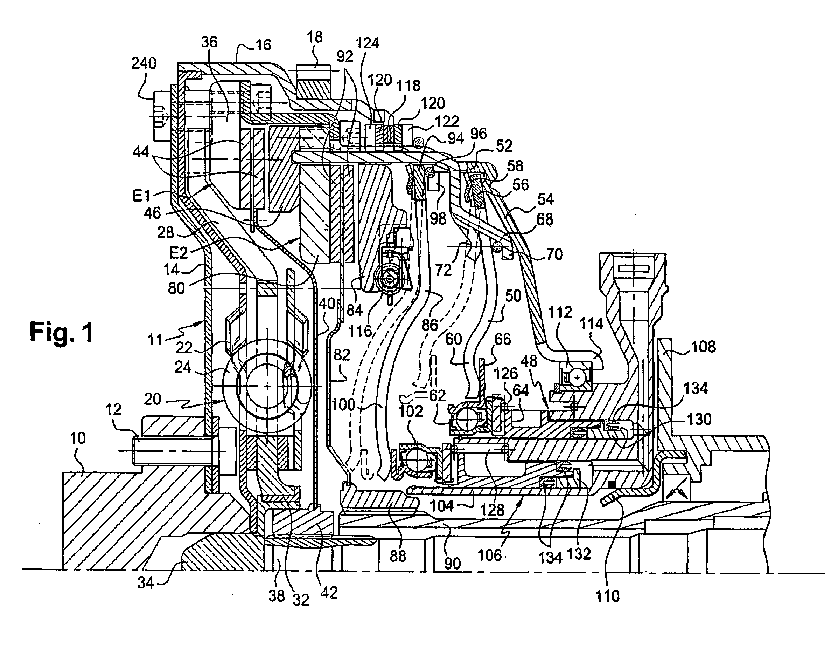

On se réfère d'abord à la figure 1, dans laquelle la référence 10 désigne l'extrémité d'un arbre moteur, qui est ici le vilebrequin d'un moteur à combustion interne de véhicule automobile et sur lequel un volant d'inertie primaire 11 est fixé au moyen de vis 12. Le volant d'inertie primaire 11 comprend une tôle annulaire flexible 14 dont la partie radialement interne est fixée sur l'arbre 10 par les vis 12 et dont la partie radialement externe comprend un rebord cylindrique 16 s'étendant dans le sens opposé à l'arbre 10 et portant une couronne de démarreur 18.

La partie radialement externe de la tôle annulaire 14 est solidaire d'un élément d'entrée d'un amortisseur de torsion 20, cet élément d'entrée étant formé de deux rondelles de guidage parallèles 22 comportant des fenêtres dans lesquelles sont logés des ressorts à spires 24 à disposition circonférencielle autour de l'axe de rotation 26 du dispositif, ces ressorts coopérant avec un élément de sortie 28 de l'amortisseur de torsion qui est constitué par un voile annulaire dont la périphérie interne 30 est centrée et guidée en rotation au moyen d'un palier lisse 32 sur une pièce intermédiaire 34 centrée sur l'arbre moteur 10.

La périphérie radialement externe du voile annulaire 28 est solidaire d'un plateau annulaire radial 36 qui fait partie d'un volant d'inertie secondaire et qui forme un plateau de réaction d'un premier embrayage E1 permettant de relier sélectivement l'arbre moteur 10 à un premier arbre mené 38 qui est un arbre d'entrée d'une boîte de vitesses mécanique robotisée.

Le premier embrayage E1 comprend un disque de friction 40 fixé à un moyeu 42 solidaire en rotation d'une extrémité de l'arbre mené 38, le disque 40 portant des garnitures de friction 44 destinées à être serrées entre le plateau de réaction 36 et un plateau de pression 46 sous commande d'un actionneur comportant un premier vérin hydraulique 48 qui est de forme annulaire et s'étend axialement autour du premier arbre mené 38, ce vérin 48 agissant sur le plateau de pression 46 par l'intermédiaire d'une butée d'embrayage, d'un diaphragme annulaire 50 et de poussoirs 52 qui sont orientés parallèlement à l'axe de rotation 26.

Le diaphragme annulaire 50 est monté sur un couvercle d'embrayage 54 qui s'étend à l'intérieur du rebord cylindrique 16 du volant d'inertie primaire et qui est fixé par des vis sur le plateau de réaction 36 du premier embrayage E1.

Le diaphragme annulaire 50 comprend une partie annulaire radialement externe 56 formant rondelle Belleville qui est calée sur le couvercle 54 au moyen d'un anneau autobloquant 58 et qui comprend des doigts radiaux 60 s'étendant vers l'axe de rotation et venant en appui à leur extrémité sur la butée d'embrayage 62 précitée qui est fixée au piston 64 du vérin 48.

La butée 62 comprend un moyen d'auto centrage par rapport au piston du vérin. En raison du centrage de l'actionneur sur le vérin, le jeu radial du moyen d'auto centrage peut être réduit (inférieur à 0,5 mm) voire annulé.

De préférence, pour réduire l'encombrement axial du dispositif, les extrémités radialement internes des doigts 60 sont appliquées, non pas sur l'extrémité avant de la butée d'embrayage 62, mais sur une rondelle 66 qui est fixée à l'arrière de la butée 62, c'est-à-dire du côté opposé à l'arbre moteur 10.

Les doigts radiaux 60 du diaphragme annulaire 50 sont en appui, par l'intermédiaire d'un jonc 68, sur des pattes 72 des poussoirs 52 du plateau de pression 46, et s'étendent entre ces pattes 72 et d'autres pattes 70 des poussoirs 52. Ainsi, quand le vérin 48 est alimenté en liquide sous pression, son piston 64 est déplacé vers l'avant et pousse la butée 62 qui, par la rondelle 66, pousse vers l'avant les doigts radiaux 60 du diaphragme annulaire 50 jusque dans la position représentée en pointillés, cette poussée étant transmise par les poussoirs 52 au plateau de pression 46 qui serre les garnitures de friction 44 sur le plateau de réaction 36 pour la transmission d'un couple de l'arbre moteur 10 à l'arbre mené 38 par l'intermédiaire du disque de friction 40 et du moyeu 42.

Quand on fait chuter la pression de commande du vérin 48, les doigts radiaux 60 du diaphragme 50 repoussent le piston 64 vers la droite sur le dessin et le ramènent dans la position représentée en trait plein, ce mouvement de retour étant transmis par le jonc annulaire 68 et les pattes 70 aux poussoirs 52 qui ramènent le plateau de pression 46 dans la position représentée où l'embrayage E1 est ouvert. De façon classique, le plateau de pression 46 peut être relié au couvercle d'embrayage 54 par des langues élastiques circonférencielles ou tangentielles de rappel du plateau 46 dans la position représentée.

On notera que le diaphragme annulaire 50 coopère avec deux moyens d'appui circonférenciels, sur une nervure du couvercle 54 et sur l'anneau autobloquant 58 respectivement, et avec deux moyens d'appui circonférenciels sur le plateau de pression 46 de l'embrayage, ces moyens d'appui étant formés par les pattes 70 et 72 et par le jonc 68.

Un deuxième embrayage E2 est logé à l'intérieur du couvercle d'embrayage 54, et comprend un plateau de réaction 80 solidaire du couvercle 54 et formant butée définissant une position de repos du plateau de pression 46 du premier embrayage E1, le deuxième embrayage E2 comprenant également un disque de friction 82 et un plateau de pression 84 associé à un diaphragme annulaire 86, le disque de friction 82 étant fixé à sa périphérie interne sur un moyeu 88 solidaire en rotation d'un second arbre mené 90 qui est tubulaire et coaxial au premier arbre mené 38 et qui s'étend autour de celui-ci pour former un second arbre d'entrée de la boîte de vitesses robotisée.

La partie radialement externe du disque de friction 82 porte des garnitures de friction 92 qui sont serrées par le plateau de pression 84 sur le plateau de réaction 80 du deuxième embrayage E2 quand le plateau de pression 84 est poussé vers l'avant par le diaphragme annulaire 86.

Les poussoirs 52 du plateau de pression 46 s'étendent radialement à l'extérieur du plateau de pression 84 et du disque de friction 82 et passent à travers des ouvertures ou des échancrures du plateau de réaction 80 pour atteindre le plateau de pression 46.

Le diaphragme annulaire 86 comprend une partie annulaire radialement externe 94 qui est en appui sur un jonc 96 porté par des pattes 98 du couvercle 54, et des doigts radiaux 100 s'étendant vers l'axe de rotation et venant en appui sur une butée d'embrayage 102 fixée à l'extrémité d'un piston 104 d'un vérin hydraulique 106 qui est coaxial au premier vérin hydraulique 48 et qui s'étend à l'intérieur de celui-ci entre le piston 64 et le second arbre mené 90. Le jonc 96 forme un pivot du diaphragme sur le couvercle, et ce pivot peut être réalisé en un acier de dureté choisie. De préférence, le diaphragme 86 est monté comme le diaphragme 50 avec un double appui circonférenciel sur le couvercle 54 et sur le plateau de pression, respectivement.

Les vérins 48 et 106 forment un ensemble unitaire qui est centré sur le carter 108 de la boîte de vitesse robotisée au moyen d'une bague 110 comme représenté. Le cylindre du vérin 48 porte un palier 112 de guidage en rotation de l'extrémité arrière 114 du couvercle d'embrayage 54, ce palier 112 formant une butée de retenue axiale du couvercle 54 et de reprise des efforts qui sont appliqués aux embrayages par les vérins 48 et 106.

Le palier est formé par un roulement monté serré sur l'extrémité 114 du couvercle et sur le corps du vérin. Pour répartir la pression de serrage et compenser des défauts de circularité du serrage de la bague extérieure du roulement, l'extrémité 114 du couvercle est cylindrique et comprend des fentes longitudinales qui lui confèrent une petite élasticité radiale. Pour le serrage de la bague intérieure du roulement, on peut avantageusement utiliser une bague métallique surmoulée sur la bague intérieure du roulement.

Des moyens 116 de rattrapage automatique d'usure des garnitures de friction 92 sont montés sur le plateau de pression 84 du deuxième embrayage E2 entre ce plateau de pression et les doigts radiaux 100 du diaphragme annulaire 86.

Dans ce dispositif, le volant d'inertie primaire est formé de la tôle annulaire flexible 14 et des éléments solidaires de cette tôle annulaire, à savoir le rebord cylindrique 16, la couronne de démarreur 18 et les éléments d'entrée 22 de l'amortisseur de torsion 20, tandis que le volant d'inertie secondaire comprend le plateau de réaction 36 du premier embrayage, le couvercle d'embrayage 54 et les éléments portés par ce couvercle, à savoir le plateau de pression 46 du premier embrayage, le plateau de réaction 80 du second embrayage et son plateau de pression ainsi que le dispositif 116 de rattrapage automatique d'usure et des diaphragmes annulaires 50 et 86.

Des moyens de solidarisation en rotation des deux volants d'inertie sont agencés radialement à l'extérieur du volant secondaire et du couvercle d'embrayage 54, autour du plateau de pression 84 du second embrayage et comprennent un disque 118 porté par l'extrémité arrière du rebord cylindrique 16 du volant d'inertie primaire et deux disques 120 portés par le couvercle d'embrayage 54, les disques 120 étant eux-mêmes en appui sur une butée arrière 122 solidaire du couvercle d'embrayage 54 et sur une butée avant 124 formée par des pattes radiales orientées vers l'extérieur des poussoirs 52 du plateau de pression 46 du premier embrayage E1.

Le disque 18 est par exemple en matière plastique chargée de fibres de verre et les deux disques de serrage 120 sont coulissants axialement sur le couvercle d'embrayage 54 et sont solidarisés en rotation avec lui par des dentures internes en prise avec une denture externe du couvercle 54.

Ces moyens de solidarisation des deux volants d'inertie sont actifs dans la position représentée aux dessins, qui est une position de repos de l'actionneur formé par le vérin 48, et solidarisent en rotation les deux volants d'inertie dans cette position de repos où le premier embrayage E1 est ouvert.

Le dispositif selon l'invention comprend également des moyens de compensation de pression qui sont associés aux vérins 48 et 106 pour s'opposer à l'actionnement des embrayages E1 et E2 par ces vérins tant que la pression de commande de ces vérins n'atteint pas une valeur seuil prédéterminée, qui est de 10 bars (1 MPa).

La pression de service de chaque vérin 48, 106 est comprise entre 10 et 30 bars (1 et 3 MPa). Les pressions de commande inférieures à la pression de seuil permettent un rattrapage des courses mortes ainsi que des jeux et une mise en contrainte des moyens d'actionnement des embrayages de sorte que le début du serrage de chaque embrayage peut être commandé de façon progressive, précise et sensiblement linéaire lorsque la pression de commande des vérins devient supérieure à la pression de seuil précitée.

Dans le mode de réalisation représenté en figure 1, ces moyens de compensation de pression sont constitués par les diaphragmes annulaires 50, 86 qui sont portés par le couvercle d'embrayage 54 et qui sont montés entre les butées d'embrayage 62, 102 et les plateaux de pression 46 et 84 des embrayages, le diaphragme annulaire 50 agissant sur le plateau de pression 46 du premier embrayage E1 par l'intermédiaire des poussoirs 52.

Dans la position de repos représentée en figure 1, la force appliquée par les extrémités radialement internes des doigts 60, 100 des diaphragmes annulaires sur les butées d'embrayage 62, 102 est déterminée pour équilibrer une pression de commande des vérins 48, 106 de 10 bars (1 MPa).

Pour réaliser l'appui des doigts 60, 100 sur les butées 62, 102, les diaphragmes 50, 86 sont en appui sur les anneaux autobloquants 58.

Quand la pression de commande de l'un des vérins devient supérieure à cette valeur seuil, le piston 64, 104 du vérin équilibre la force d'appui du diaphragme 50, 86 sur sa butée arrière 68, 70 après un fléchissement des doigts 60, 100 mis en contrainte et un déplacement vers l'avant. Au-delà du point d'équilibre, ce déplacement est transmis par le diaphragme annulaire 50, et les poussoirs 52 ou par le diaphragme 86 au plateau de pression 46, 84 de l'embrayage concerné. Cela permet de serrer très progressivement l'embrayage et de contrôler son serrage de façon précise. Il faut pour cela que la courbe de charge du diaphragme annulaire 50, 100 soit très peu ensellée de façon à ce que la force exercée par ce diaphragme sur la butée de débrayage correspondante 62, 102 ne diminue pas au cours du déplacement de la butée de débrayage vers l'avant. Il est préférable que la force exercée par le diaphragme sur la butée d'embrayage soit continûment croissante pour éviter tout risque de déplacement brutal de la butée de débrayage vers l'avant jusqu'en fin de course (ce qui se produirait si la courbe de charge du diaphragme annulaire était ensellée et si la force appliquée par ce diaphragme sur la butée de débrayage diminuait avec la course de la butée vers l'avant).

Par ailleurs, cette force s'ajoute à la force de serrage de la friction pour définir la pression à exercer sur la butée. On cherchera donc à la minimiser. La courbe effort / déplacement du diaphragme comporte alors un "plateau" de force constante ou faiblement croissante sur toute la course de déplacement comprenant la course d'usure de la friction. De préférence, cette variation d'effort est inférieure à 100%.

En variante, les moyens de compensation de pression peuvent comprendre des moyens élastiques du type de rondelle Belleville ou analogue interposés entre le plateau de pression 46, 84 de l'embrayage concerné et un support tel que le couvercle d'embrayage 54 pour exercer une force de rappel sur le plateau de pression et solliciter en permanence vers la position de repos représentée en figure 1. Ces moyens élastiques peuvent être dimensionnés pour exercer sur la butée de débrayage 62, 102 correspondante une force s'opposant à son déplacement vers l'avant tant que la pression de commande du vérin 48, 106 ne dépasse pas la valeur seuil précitée.

La force de compensation de pression fournie par ces moyens élastiques peut en variante s'ajouter à celle appliquée par le diaphragme annulaire 50, 100 sur la butée d'embrayage pour équilibrer la force développée par la pression de seuil précitée.

Les moyens classiques de rappel d'un plateau de pression en position d'ouverture, qui comprennent en général des languettes tangentielles ou circonférencielles élastiquement déformables reliant le plateau de pression au couvercle d'embrayage, peuvent également contribuer à l'établissement de la force de compensation de pression qui est appliquée à la butée de débrayage.

Par ailleurs et comme représenté en figure 1, des ressorts de précharge 126, 128 respectivement, peuvent être montés sur les vérins 48, 106 autour des pistons 64, 104 pour solliciter constamment les pistons 64, 104 vers l'avant et maintenir les butées d'embrayage 62, 102 en appui sur les extrémités des doigts radiaux 60, 100 des diaphragmes annulaires des embrayages.

Comme déjà indiqué pour réduire l'encombrement axial du dispositif, les extrémités des doigts radiaux 60 du diaphragme annulaire 50 sont en appui sur une rondelle 66 s'étendant à l'arrière de la butée d'embrayage 62. Toujours dans le but de réduire l'encombrement axial, les pistons 64, 104 sont guidés en translation axiale par leur surface cylindrique interne sur une paroi cylindrique interne du cylindre du vérin correspondant. La surface cylindrique interne de chaque piston 64, 104 doit avoir une valeur minimale pour que le piston soit correctement guidé en translation. Pour cela, on peut ajouter une pièce ou bague cylindrique 130, 132 à l'extrémité arrière de chaque piston 64, 104, cette pièce cylindrique 130, 132 étant solidarisée avec le piston par exemple par soudure aux ultrasons et portant uniquement sur la paroi cylindrique interne du cylindre correspondant du vérin. Des joints 134 d'étanchéité dynamique, par exemple du type en U ou à lèvres, sont montés à l'extrémité arrière des pistons 64, 104, par exemple sur la pièce cylindrique rapportée 130, 132 ou à la jonction de l'extrémité arrière du piston et de cette pièce rapportée 130, 132.

Le fonctionnement de ce dispositif est le suivant :

En position de repos, les deux embrayages E1 et E2 sont ouverts, et le dispositif est dans la position représentée en figure 1. Pour le démarrage du moteur à combustion interne du véhicule, les vérins 48, 106 ne sont pas alimentés ou sont alimentés par une pression hydraulique inférieure à la pression de seuil, de sorte que les deux embrayages E1 et E2 restent complètement ouverts. Les volants d'inertie primaire et secondaire sont solidarisés en rotation par le serrage du disque 118 entre les disques 120 ce qui permet de passer par la fréquence de résonance du double volant amortisseur (qui correspond à une vitesse de rotation inférieure au régime de ralenti du moteur) sans risque d'oscillation de grande amplitude du volant secondaire et de détérioration ou de destruction de la transmission. Après démarrage du moteur à combustion interne, l'alimentation du vérin 48 par une pression supérieure à la valeur seuil précitée permet d'abord de désolidariser en rotation les deux volants d'inertie, puis de fermer l'embrayage E1 de façon progressive et linéaire par exemple pour un démarrage lent du véhicule.

Ensuite, au cours du déplacement du véhicule, les volants d'inertie restent désolidarisés en rotation, la pression d'alimentation du vérin 48 restant toujours au moins égale à la pression de seuil quel que soit l'état fermé ou ouvert de l'embrayage E1.

A l'arrêt du moteur, les embrayages E1 et E2 sont ouverts et la pression d'alimentation 48 est réduite au-dessous de la pression de seuil pour provoquer la solidarisation en rotation des deux volants d'inertie et éviter les problèmes au passage par la fréquence de résonance du double volant amortisseur.

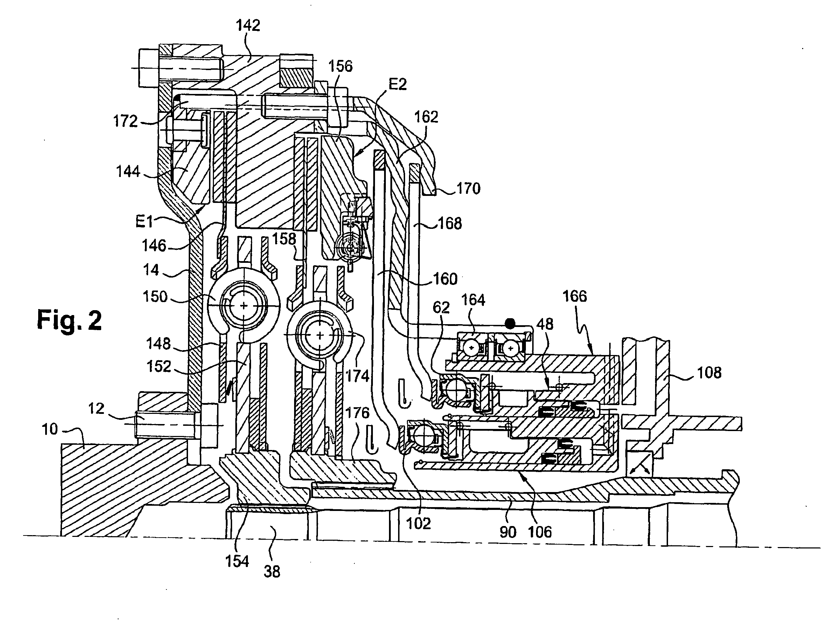

Dans la variante de réalisation représentée schématiquement en figure 2, le dispositif selon l'invention comprend un volant d'inertie unique comprenant une tôle annulaire flexible 14 fixée à sa périphérie radialement interne par des vis 12 sur l'arbre moteur 10 et portant à sa périphérie radialement externe une masse annulaire d'inertie 142 formant le plateau de réaction de deux embrayages E1 et E2 qui sont disposés de part et d'autre de cette masse annulaire 142, l'embrayage E1 étant situé entre cette masse annulaire 142 et la tôle annulaire flexible 14 et l'embrayage E2 étant situé du côté opposé de cette masse annulaire 142 c'est-à-dire vers l'arrière du dispositif.

L'embrayage E1 comprend un plateau de pression 144 et un disque de friction 146 logés entre la masse annulaire 142 et la tôle annulaire flexible 14, le disque de friction 146 étant porté par une rondelle de guidage 148 d'un amortisseur de torsion 150 dont l'élément de sortie est formé d'un voile annulaire 152 fixé à sa périphérie interne sur un moyeu 154 solidaire en rotation de l'extrémité d'un premier arbre mené 38.

L'embrayage E2 comprend un plateau de pression 156 et un disque de friction 158 qui sont logés avec un diaphragme annulaire 160 à l'arrière de la masse annulaire 142, entre celle-ci et un couvercle d'embrayage 162 solidaire de la masse annulaire 142. L'extrémité arrière du couvercle d'embrayage 162 est reliée par un double roulement 164 formant butée axiale de reprise d'effort à un module 166 comprenant les vérins précités 48, 106 de commande des deux embrayages. Le diaphragme annulaire 168 agissant sur le plateau de pression 144 du premier embrayage E1 s'étend à l'extérieur du couvercle d'embrayage 162 à l'arrière de celui-ci et prend appui d'une part sur le couvercle d'embrayage 162 et d'autre part sur une jupe 170 reliée au plateau de pression 144 par des poussoirs 172 qui s'étendent autour du second embrayage E2 et qui traversent la masse annulaire 142 ces poussoirs agissant en traction sur le plateau et étant fixés par soudure sur une rondelle fixée au plateau..

Le module 166 d'actionnement des embrayages comporte des butées d'embrayage 62, 102 comme déjà décrit, qui sont appliquées sur les extrémités libres des doigts radiaux des diaphragmes annulaires 168, 160 respectivement.

Le disque de friction 158 de l'embrayage E2 est relié par un autre amortisseur de torsion 174 du même type que l'amortisseur de torsion 150 déjà décrit, à un moyeu 176 solidaire en rotation de l'extrémité du second arbre mené 90.

Comme dans le mode de réalisation précédent, des moyens de compensation de pression sont prévus pour exercer sur les butées de débrayage 62, 102 des forces axiales s'opposant au déplacement vers l'avant des pistons des vérins 48, 106 tant que ces vérins ne sont pas alimentés par une pression de commande supérieure à une pression de seuil prédéterminée.

Ces moyens de compensation de pression peuvent être constitués par les diaphragmes annulaires 160, 168 ou par les autres moyens décrits en référence à la figure 1.

Comme dans le mode de réalisation précédent, les deux embrayages E1 et E2 sont ouverts dans la position de repos représentée aux dessins.

Par ailleurs, le module 166 formé par les deux vérins 48, 106 est monté par enfichage axial sur le carter 108 de la boîte de vitesses, cet enfichage axial opéré par translation parallèlement à l'axe de rotation établissant une connexion entre les chambres des vérins et des conduits d'alimentation en liquide hydraulique sous pression qui sont formés dans le carter 108.

Dans cette réalisation, le module 166 est porté par le couvercle d'embrayage. En variante, seul l'un des deux vérins peut être connecté par enfichage axial sur le carter 108 à des moyens d'alimentation en liquide sous pression.

Le fonctionnement de ce dispositif est pour l'essentiel identique à celui du dispositif de la figure 1 en ce qui concerne la commande des embrayages E1 et E2.

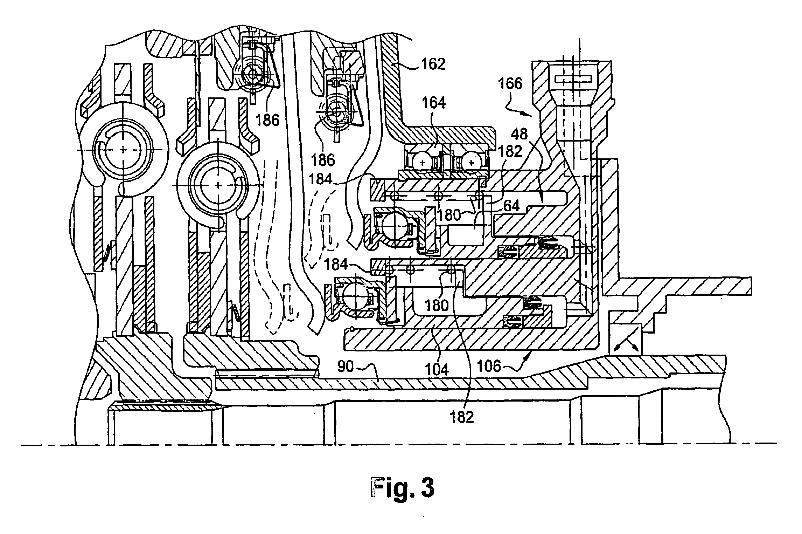

Dans la variante de réalisation représentée partiellement en figure 3, on retrouve certains composants des dispositifs des figures 1 et 2, mais les moyens de compensation de pression sont ici formés par des ressorts à spires 180 qui sont montés autour des pistons 64, 104 des vérins 48, 106 entre des pattes arrière 182 solidaires des pistons des vérins et des pattes avant 184 solidaires des cylindres des vérins.

Pour le reste, on retrouve la structure déjà décrite et représentée, à l'exception du fait que chaque embrayage E1 est muni d'un dispositif 186 de rattrapage automatique d'usure, alors que seul l'embrayage E2 du dispositif de la figure 2 en était équipé.

En outre, les deux diaphragmes annulaires de commande des embrayages sont à l'intérieur du couvercle d'embrayage 162 qui, à son extrémité arrière, est monté sur le module 166 formé par les deux vérins au moyen d'un double roulement 164.

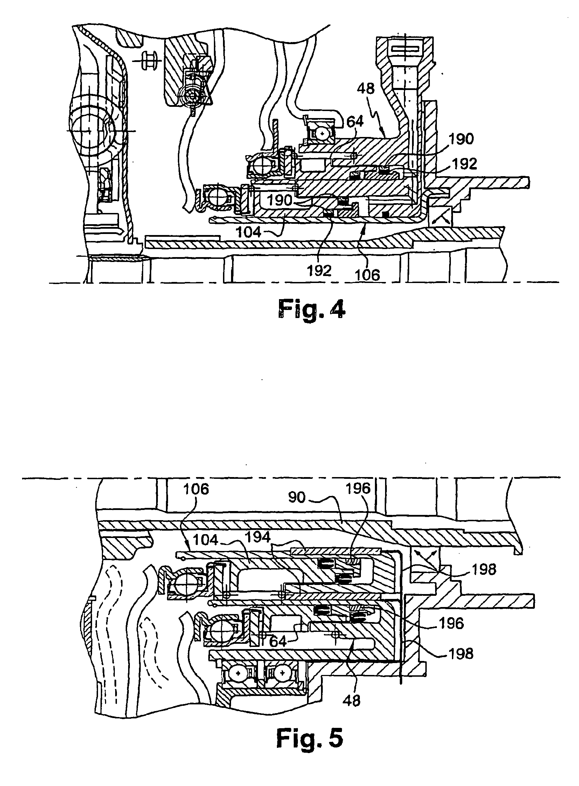

Dans la variante de réalisation de la figure 4, on retrouve sensiblement la structure déjà décrite en référence à la figure 1, à l'exception des joints d'étanchéité montés sur les pistons 64 et 104 de vérins 48 et 106, ces joints étant des joints composites comprenant une bague en matière plastique 190 montée sur un joint torique 192.

Dans la variante de réalisation de la figure 5, les vérins 48, 106 du module d'actionnement des deux embrayages sont équipés de capteurs de suivi du déplacement des pistons 64, 104, ces capteurs étant du type inductif et comprenant chacun une bobine 194 montée sur la paroi cylindrique radialement interne du cylindre du vérin correspondant, et un anneau conducteur 196 qui est porté par le piston 64, 104 correspondant et qui entoure la bobine associée 194, cet anneau étant déplaçable en translation avec le piston du vérin sensiblement d'une extrémité à l'autre de la bobine lors de l'actionnement des embrayages.

Chaque bobine 194 est alimentée en tension électrique par des conducteurs 198. Une analyse par un calculateur de la réponse à un signal envoyé permet de suivre le déplacement axial du piston.

Le capteur de déplacement du piston permet de déterminer une position du piston pour laquelle les volants d'inertie ne sont plus solidarisés en rotation et l'embrayage est encore ouvert, la pression de commande du vérin étant faiblement supérieure à la valeur seuil précitée.

En pratique, le système de commande du moteur du véhicule mesure les positions du piston qui correspondent respectivement à un état initial où les volants sont solidarisés en rotation et au point de léchage de l'embrayage (début du serrage) puis détermine une position intermédiaire du piston pour laquelle les volants ne sont plus solidaires et l'embrayage est complètement ouvert. Cela évite de déterminer cette position intermédiaire à partir de la pression de commande, ce qui serait moins précis et dans certains cas difficile à réaliser.

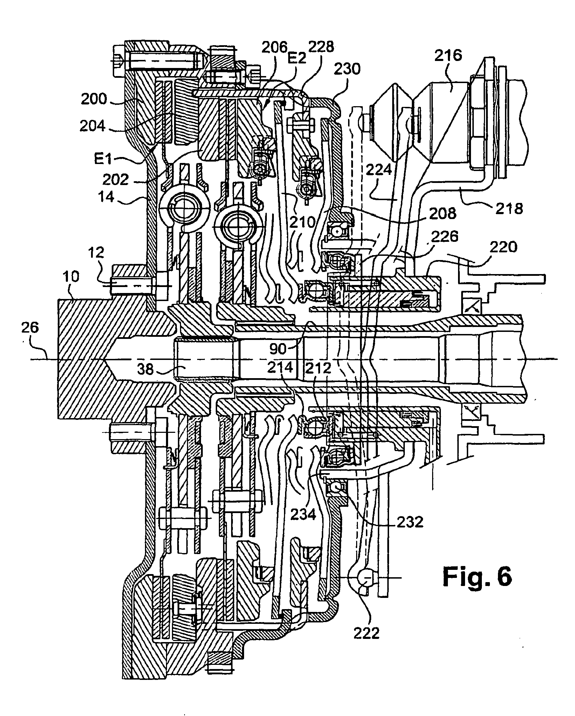

Dans la variante de réalisation représentée schématiquement en figure 6, le dispositif selon l'invention est sensiblement du même type que celui de la figure 3, et comprend deux embrayages E1 et E2 dont les plateaux de réaction 200, 202 sont portés par une tôle annulaire flexible 14 fixée à sa périphérie interne par des vis 12 sur un arbre moteur 10, les plateaux de pression 204 et 206 des deux embrayages étant actionnés par des diaphragmes annulaires 208, 210 associés par des butées d'embrayage 212, 214 à des vérins hydrauliques dont l'un est annulaire et monté autour des arbres menés 38 et 90 du dispositif et dont l'autre est cylindrique et n'est pas monté autour des arbres menés mais s'étend parallèlement à l'axe de rotation 26 du dispositif à distance des arbres menés 38 et 90 et du vérin annulaire.

Ce vérin cylindrique 216 est le vérin d'actionnement du premier embrayage E1 et est fixé sur la périphérie d'une bride annulaire 218 fixée sur le corps du vérin tubulaire 220 d'actionnement du second embrayage E2 monté autour des arbres menés 38 et 90.

La bride annulaire 218 porte une rotule 222 d'articulation d'une fourchette 224 dont une extrémité coopère avec la rotule 222 en un point diamétralement opposé au vérin cylindrique 216 par rapport à l'axe de rotation 26, et dont l'autre extrémité est en appui sur le piston du vérin 216. Cette fourchette 224 est en appui par sa partie médiane sur une bague 226 centrée sur l'axe de rotation 26 et portant la butée 214 du premier embrayage E1.

Comme dans les modes de réalisation précédemment décrits, les deux embrayages E1 et E2 sont ouverts au repos. Le premier embrayage E1 est fermé par alimentation du vérin 216 par une pression de commande supérieure à une pression de seuil prédéterminée, le déplacement du piston du vérin 216 étant transmis par la fourchette 224 à la bague 226 portant la butée de débrayage 214 qui pousse vers l'avant les extrémités radialement internes des doigts radiaux du diaphragme annulaire 208. La partie radialement externe de ces doigts radiaux est en appui, par l'intermédiaire d'un mécanisme de rattrapage automatique d'usure, sur des poussoirs 228 qui traversent le plateau de réaction 202 du second embrayage E2 et qui sont reliés au plateau de pression 204 du premier embrayage E1.

Le second embrayage E2 est fermé par alimentation du vérin annulaire 201 par une pression de commande supérieure à une pression de seuil prédéterminée, le déplacement vers l'avant du piston de ce vérin agissant sur l'extrémité radialement interne des doigts radiaux du diaphragme annulaire 210 qui s'appuie par l'intermédiaire d'un mécanisme de rattrapage d'usure sur le plateau de pression 206 du second embrayage E2.

Le couvercle d'embrayage 230 fixé au plateau de réaction 202 du second embrayage E2 est relié au vérin annulaire 220 par un palier 232 formant butée axiale de reprise d'effort, ce palier 232 étant monté sur une enveloppe cylindrique 234 qui est solidaire de la bride annulaire 218 et du vérin annulaire 220 et qui s'étend autour de la butée de débrayage 212 du premier embrayage E1, la fourchette 224 s'étendant à travers des orifices de cette enveloppe cylindrique.

Comme dans les modes de réalisation précédents, les moyens de compensation de pression associés au vérin 216 et 220 sont formés par les diaphragmes annulaires 208 et 210 des deux embrayages et / ou par des moyens élastiques du type rondelle Belleville montés entre les plateaux de pression 204 et 206 de ces embrayages et le couvercle d'embrayage 230 ou un autre élément solidaire du plateau de réaction de l'embrayage correspondant.

Dans tous les modes de réalisation décrits ci-dessus et représentés dans les dessins annexés, les deux embrayages et leurs vérins d'actionnement constituent un ensemble qui est monté en périphérie d'une tôle annulaire flexible 14 au moyen de vis 240 dont les têtes sont orientées vers l'avant c'est-à-dire se trouvent du côté de l'arbre moteur 10 et sont actionnées de ce côté, la tôle annulaire flexible 14 étant déjà fixée sur l'arbre moteur 10 par les vis 12.

Cet ensemble peut être monté flottant autour des arbres menés 38, 90, ou peut être centré à sa partie avant sur l'arbre moteur et à sa partie arrière sur le carter 108 de la boîte de vitesses au moyen d'une bague 110 comme déjà indiqué.

Dans le mode de réalisation de la figure 4, cette bague de centrage peut former la paroi cylindrique intérieure fixe du vérin 106 sur laquelle est guidé le piston 104 de ce vérin.

## Revendications

1. Dispositif de transmission de couple en particulier pour véhicule automobile, comprenant au moins un embrayage (E1) à sec ouvert au repos monté entre un arbre moteur (10) et un arbre mené (38), tel par exemple que l'arbre d'entrée d'une boîte de vitesses, ledit embrayage (E1) comprenant un plateau de pression (46) coopérant avec un disque de friction (40) et des moyens à ressort de rappel du plateau de pression (46) dans une position de repos ou position inactive, et des moyens d'actionnement de l'embrayage comprenant un vérin hydraulique (48) comportant au moins un piston, **caractérisé en ce que** le vérin hydraulique (48) est commandé en pression de liquide hydraulique, le piston étant déplacé sous l'effet d'une pression de liquide hydraulique vers l'embrayage afin d'actionner l'embrayage vers une position embrayée, et **en ce que** le dispositif comprend des moyens (50,180) de compensation de pression agissant sur lesdits moyens d'actionnement pour s'opposer à l'actionnement de l'embrayage (E1) à partir d'une position de repos quand la pression de commande du vérin (48) est inférieure à une valeur seuil de 10 bars quand la pression de service du vérin est comprise entre 10 bars of 30 bars.

2. Dispositif selon la revendication 1, **caractérisé en ce que** les moyens de compensation sont des moyens élastiques.

3. Dispositif selon la revendication 1 ou 2, **caractérisé en ce que** les moyens de compensation de pression comprennent un ressort (180) monté sur le vérin (48) et s'opposant à l'action de ce vérin sur l'embrayage (E1).

4. Dispositif selon la revendication 3, **caractérisé en ce que** le ressort (180) est monté entre le cylindre et le piston (64) du vérin (48) et s'oppose au déplacement du piston dans le cylindre par la pression de commande du vérin.

5. Dispositif selon la revendication 1 ou 2, **caractérisé en ce que** le vérin (48) agit sur l'embrayage (E1) par l'intermédiaire d'une butée d'embrayage (62).

6. Dispositif selon la revendication 1 ou 2, **caractérisé en ce que** le vérin (48) agit sur l'embrayage (E1) par l'intermédiaire de moyens mécaniques de transformation de mouvement comprenant une butée d'embrayage (62).

7. Dispositif selon l'une des revendications 1 ou 5, **caractérisé en ce que** l'embrayage (E1) comprend un diaphragme annulaire (50) agissant sur le piston (64) du vérin (48) et formant lesdits moyens de compensation de pression.

8. Dispositif selon la revendication 7, **caractérisé en ce que** le diaphragme annulaire (50) est associé à des moyens d'appui circonférenciels situés en vis à vis de part et d'autre de ce diaphragme, ces moyens d'appui comprenant deux moyens (58) d'appui sur un couvercle d'embrayage (54) et deux moyens d'appui (68,70,72) sur un plateau de pression de l'embrayage.

9. Dispositif selon l'une des revendications 1 à 8, **caractérisé en ce que** les moyens de rappel du plateau de pression comprennent une rondelle Belleville montée entre le plateau de pression (46) et un élément fixe tel par exemple que le couvercle d'embrayage (54).

10. Dispositif selon l'une des revendications 1 à 8 , **caractérisé en ce que** les moyens de rappel du plateau de pression comprennent des languettes circonférencielles ou tangentielles élastiquement déformables de rappel du plateau de pression (46) dans une position de repos ou position inactive.

11. Dispositif selon la revendication 7 ou 9, **caractérisé en ce que** la courbe de charge du diaphragme annulaire (50) ou de la rondelle Belleville est peu ensellée.

12. Dispositif selon l'une des revendications précédentes, **caractérisé en ce que** l'effort développé par les moyens de compensation de pression est continûment croissant avec la course du piston (64) du vérin depuis une position de repos ou position inactive.

13. Dispositif selon la revendication 11, **caractérisé en ce que** la croissance de l'effort sur la course de déplacement du plateau et d'usure de la friction est inférieure à 100%.

14. Dispositif selon l'une des revendications précédentes, **caractérisé en ce qu'**il comprend des moyens de détection de déplacement du piston (64) du vérin (48), ces moyens de détection étant du type inductif et comprenant une bobine (194) portée par le cylindre du vérin, un élément inductif (196) porté par le piston du vérin et des moyens de mesure d'un courant électrique passant dans la bobine.

15. Dispositif selon l'une des revendications précédentes, **caractérisé en ce que** le vérin (48) est annulaire et comprend deux parois cylindriques coaxiales de diamètres différents s'étendant autour de l'arbre mené (38) et entre lesquelles est monté le piston (64) guidé en translation sur la paroi cylindrique interne du vérin.

16. Dispositif selon la revendication 15, **caractérisé en ce que** le piston (64) est prolongé axialement par un élément rapporté (130) guidé sur la paroi cylindrique interne du vérin et comporte des joints d'étanchéité (134,190,192) portés par l'élément rapporté ou montés entre celui-ci et le piston.

17. Dispositif selon la revendication 16, **caractérisé en ce que** les joints d'étanchéité (134) sont du type en U ou à lèvres.

18. Dispositif selon l'une des revendications précédentes, **caractérisé en ce qu'**un palier (112) formant butée axiale de reprise d'effort est monté sur le vérin (48) entre celui-ci et un couvercle d'embrayage (54).

19. Dispositif selon la revendication 18, **caractérisé en ce que** la partie (114) du couvercle (54) en contact avec le palier (112) est cylindrique avec des fentes longitudinales d'élasticité.

20. Dispositif selon l'une des revendications précédentes, **caractérisé en ce qu'**il comprend deux embrayages (E1, E2) montés en parallèle entre un volant d'inertie (14) entraîné en rotation par l'arbre moteur et deux arbres menés (38,90) coaxiaux formant les arbres d'entrée d'une boîte de vitesses robotisée, les deux embrayages étant du type précité et étant actionnés par des vérins hydrauliques (48,106) commandés en pression de liquide, le dispositif comprenant des moyens de compensation de pression du type précité associés à chaque embrayage et à chaque vérin d'actionnement.

21. Dispositif selon la revendication 20, **caractérisé en ce que** le volant d'inertie (14) est un volant flexible.

22. Dispositif selon la revendication 20, **caractérisé en ce que** le volant d'inertie est le volant secondaire d'un double volant amortisseur dont le volant d'inertie primaire est solidaire de l'arbre moteur (10).

23. Dispositif selon la revendication 22, **caractérisé en ce que** le volant d'inertie primaire (14) est un volant flexible.

24. Dispositif selon l'une des revendications 20 à 23, **caractérisé en ce que** les deux vérins hydrauliques (48,106) sont coaxiaux et agencés l'un à l'intérieur de l'autre autour des arbres menés.

25. Dispositif selon la revendication 24, **caractérisé en ce que** les deux vérins (48,106) forment un ensemble unitaire monté flottant ou centré sur un carter de la boîte de vitesses.

26. Dispositif selon l'une des revendications 1 à 25, **caractérisé en ce qu'**au moins un vérin (48,106) est connecté par enfichage axial à des moyens d'alimentation en liquide hydraulique sous pression ménagés dans le carter (108) d'une boîte de vitesses.

27. Dispositif selon l'une des revendications 20 à 23, **caractérisé en ce que** les deux vérins comprennent un vérin (220) traversé axialement par les arbres menés (38,90) et portant une bride annulaire (218) qui supporte un autre vérin (216) parallèle au premier vérin (201) et une fourchette (224) articulée au moyen d'une rotule sur la bride annulaire (218), cette fourchette étant associée au piston dudit autre vérin (216) et agissant sur les moyens d'actionnement de l'un des deux embrayages.

28. Dispositif selon l'une des revendications 20 à 27, **caractérisé en ce que** les deux embrayages et leurs moyens d'actionnement forment un ensemble unitaire fixé par des vis (240) sur un volant flexible (14) solidaire de l'arbre moteur (10), ces vis ayant des têtes situées du côté de l'arbre moteur (10) et étant actionnées de ce côté.

## Claims

1. Device for transmission of torque, in particular for a motor vehicle, comprising at least one dry clutch (E1) which is open or at rest, fitted between a drive shaft (10) and a driven shaft (38), such as, for example the intake shaft of a gear box, the said clutch (E1) comprising a pressure plate (46) which co-operates with a friction disc (40) and spring means for return of the pressure plate (46) into a position of rest or inactive position, and means for actuating the clutch comprising a hydraulic jack (48) comprising at least one piston, **characterised in that** the hydraulic jack (48) is controlled by hydraulic fluid pressure, the piston being displaced under the effect of hydraulic fluid pressure towards the clutch in order to actuate the clutch towards an engaged position, and **in that** the device comprises pressure compensation means (50, 180) which act on the said actuating means in order to oppose the actuation of the clutch (E1) starting from a position of rest when the control pressure of the jack (48) is lower than a threshold value of 10 bars, when the service pressure of the jack is between 10 bars and 30 bars.

2. Device according to claim 1, **characterised in that** the compensation means are resilient means.

3. Device according to claim 1 or claim 2, **characterised in that** the pressure compensation means comprise a spring (180) which is fitted on the jack (48) and opposes the action of this jack on the clutch (E1).

4. Device according to claim 3, **characterised in that** the spring (180) is fitted between the cylinder and the piston (64) of the jack (48) and opposes the displacement of the piston in the cylinder by means of the control pressure of the jack.

5. Device according to claim 1 or claim 2, **characterised in that** the jack (48) acts on the clutch (E1) by means of a clutch stop (62).

6. Device according to claim 1 or claim 2, **characterised in that** the jack (48) acts on the clutch (E1) by means of mechanical means for transformation of movement comprising a clutch stop (62).

7. Device according to one of claims 1 or 5, **characterised in that** the clutch (E1) comprises an annular diaphragm (50) which acts on the piston (64) of the jack (48) and forms the said pressure compensation means.

8. Device according to claim 7, **characterised in that** the annular diaphragm (50) is associated with circumferential support means which are situated opposite on both sides of this diaphragm, these support means comprising two means (58) for support on a clutch cover (54) and two means (68, 70, 72) for support on a clutch pressure plate.

9. Device according to one of claims 1 to 8, **characterised in that** the return means of the pressure plate comprise a Belleville washer which is fitted between the pressure plate (46) and a fixed element, such as, for example, the clutch cover (54).

10. Device according to one of claims 1 to 8, **characterised in that** the return means of the pressure plate comprise resiliently deformable tangential or circumferential tongues for return of the pressure plate (46) to a position of rest or an inactive position.

11. Device according to claim 7 or claim 9, **characterised in that** the load curve for the annular diaphragm (50) or the Belleville washer is only slightly curved.

12. Device according to one of the preceding claims, **characterised in that** the force developed by the pressure compensation means increases continually together with the course of the piston (64) of the jack from a position of rest or inactive position.

13. Device according to claim 11, **characterised in that** the increase in the force on the course of displacement of the plate and of friction wear is less than 100%.

14. Device according to one of the preceding claims, **characterised in that** it comprises means for detection and displacement of the piston (64) of the jack (48), these detection means being of the inductive type and comprising a coil (194) which is supported by the cylinder of the jack, an inductive element (196) which is supported by the piston of the jack, and means for measuring an electric current which passes into the coil.

15. Device according to one of the preceding claims, **characterised in that** the jack (48) is annular and comprises two coaxial cylindrical walls with different diameters which extend around the driven shaft (38), and between which there is fitted the piston (64) which is guided in translation on the inner cylindrical wall of the jack.

16. Device according to claim 15, **characterised in that** the piston (64) is extended axially by an added-on element (130) which is guided on the inner cylindrical wall of the jack, and comprises seals (134, 190, 192) which are supported by the added-on element, or are fitted between the latter and the piston.

17. Device according to claim 16, **characterised in that** the seals (134) are of the "U" type or the lip type.

18. Device according to one of the preceding claims, **characterised in that** a bearing (112) which forms an axial stop for recovery of force is fitted on the jack (48), between the latter and a clutch cover (54).

19. Device according to claim 18, **characterised in that** the part (114) of the cover (54) which is in contact with the bearing (112) is cylindrical with longitudinal resilient slots.

20. Device according to one of the preceding claims, **characterised in that** it comprises two clutches (E1, E2) which are fitted in parallel between an inertia flywheel (14) which is rotated by the drive shaft, and two coaxial driven shafts (38, 90) which form the intake shafts of a robotised gear box, the two clutches being of the aforementioned type and being actuated by hydraulic jacks (48, 106) which are controlled by fluid pressure, the device comprising pressure compensation means of the aforementioned type which are associated with each clutch and each actuating jack.

21. Device according to claim 20, **characterised in that** the inertia flywheel (14) is a flexible flywheel.

22. Device according to claim 20, **characterised in that** the inertia flywheel is the secondary flywheel of a double damping flywheel, the primary inertia flywheel of which is integral with the drive shaft (10).

23. Device according to claim 22, **characterised in that** the primary inertia flywheel (14) is a flexible flywheel.

24. Device according to one of claims 20 to 23, **characterised in that** the two hydraulic jacks (48, 106) are coaxial and are arranged one inside the other around the driven shafts.

25. Device according to claim 24, **characterised in that** the two jacks (48,106) form a unit assembly which is fitted in a floating manner or centred on a housing of the gear box.

26. Device according to one of claims 1 to 25, **characterised in that** at least one jack (48, 106) is connected by means of axial plugging into means for supply of pressurised hydraulic fluid which are provided in the housing (108) of a gear box.

27. Device according to one of claims 20 to 23, **characterised in that** the two jacks comprise a jack (220) through which the driven shafts (38, 90) pass axially, and which supports an annular flange (218) which supports another jack (216) which is parallel to the first jack (201) and a fork (224) which is articulated by means of a ball joint on the annular flange (218), this fork being associated with the piston of the said other jack (216) and acting on the means for actuation of one of the two clutches.

28. Device according to one of claims 20 to 27, **characterised in that** the two clutches and their actuating means form a unit assembly which is secured by means of screws (240) onto a flexible flywheel (14) which is integral with the drive shaft (10), these screws having heads which are situated on the drive shaft (10) side, and being actuated on this side.

## Patentansprüche

1. Drehmomentübertragungsvorrichtung, insbesondere für Kraftfahrzeuge, umfassend mindestens eine in der Ruheposition geöffnete Trocken-Kupplung (E1), die zwischen einer Motorwelle (10) und einer getriebenen Welle (38), beispielsweise der Eingangswelle eines Getriebes, montiert ist, wobei die Kupplung (E1) eine mit einer Kupplungsscheibe (40) zusammenwirkende Druckplatte (46) sowie Federmittel zur Rückstellung der Druckplatte (46) in eine Ruheposition oder inaktive Position aufweist, sowie umfassend Betätigungsmittel der Kupplung, die einen hydraulischen Zylinder (48) mit mindestens einem Kolben umfassen,
**dadurch gekennzeichnet,**
**dass** der hydraulische Zylinder (48) durch Druck einer Hydraulikflüssigkeit steuerbar ist, wobei der Kolben unter der Wirkung eines Druckes der Hydraulikflüssigkeit zu der Kupplung verschiebbar ist, um die Kupplung in eine eingekuppelte Position zu betätigen, und **dadurch**, dass die Vorrichtung Druck- Kompensationsmittel (50, 180) umfasst, welche auf die Betätigungsmittel einwirken, um sich der Betätigung der Kupplung (E1) ausgehend von der Ruheposition zu widersetzen, wenn der Steuerdruck des Zylinders (48) geringer als ein Schwellwert von 10 bar ist, wenn der Betriebsdruck des Zylinders zwischen 10 bar und 30 bar liegt.

2. Vorrichtung nach Anspruch 1, **dadurch gekennzeichnet, dass** die Kompensationsmittel elastische Mittel sind.

3. Vorrichtung nach Anspruch 1 oder 2, **dadurch gekennzeichnet, dass** die Druck-Kompensationsmittel eine Feder (180) umfassen, die auf dem Zylinder (48) montiert ist und sich der Einwirkung dieses Zylinders auf die Kupplung (E1) widersetzt.

4. Vorrichtung nach Anspruch 3, **dadurch gekennzeichnet, dass** die Feder (180) zwischen dem Zylinder und dem Kolben (64) des Zylinders (48) montiert ist und sich der durch den Steuerdruck des Zylinders bewirkten Verschiebung des Kolbens in dem Zylinder widersetzt.

5. Vorrichtung nach Anspruch 1 oder 2, **dadurch gekennzeichnet, dass** der Zylinder (48) unter Vermittlung eines Kupplungslagers (62) auf die Kupplung (E1) einwirkt.

6. Vorrichtung nach Anspruch 1 oder 2, **dadurch gekennzeichnet, dass** der Zylinder (48) unter Vermittlung vom mechanischen Bewegungsübertragungsmitteln, die ein Kupplungslager (62) umfassen, auf die Kupplung (E1) einwirkt.

7. Vorrichtung nach Anspruch 1 oder 5, **dadurch gekennzeichnet, dass** die Kupplung (E1) eine ringförmige Membranfeder (50) umfasst, die auf den Kolben (64) des Zylinders (48) einwirkt und die Druck-Kompensationsmittel bildet.

8. Vorrichtung nach Anspruch 7, **dadurch gekennzeichnet, dass** die ringförmige Membranfeder (50) mit kreisförmigen Auflagemitteln verbunden ist, welche gegenüberliegend auf beiden Seiten dieser Membranfeder angeordnet sind, wobei diese Auflagemittel zwei Auflagemittel (58) auf einem Kupplungsdeckel (54) und zwei Auflagemittel (68, 70, 72) auf einer Druckplatte der Kupplung umfassen.

9. Vorrichtung nach einem der Ansprüche 1 bis 8, **dadurch gekennzeichnet, dass** die Mittel zur Rückstellung der Druckplatte eine Ringfeder umfassen, welche zwischen der Druckplatte (46) und einem festen Element wie beispielsweise dem Kupplungsdeckel (54) montiert ist.

10. Vorrichtung nach einem der Ansprüche 1 bis 8, **dadurch gekennzeichnet, dass** die Mittel zur Rückstellung der Druckplatte elastisch verformbare, kreisförmig oder tangential angeordnete Zungen zur Rückstellung der Druckplatte (46) in eine Ruheposition oder inaktive Position umfassen.

11. Vorrichtung nach Anspruch 7 oder 9, **dadurch gekennzeichnet, dass** die Belastungskurve der ringförmigen Membranfeder (50) oder der Ringfeder wenig gesattelt ist.

12. Vorrichtung nach einem der vorherigen Ansprüche, **dadurch gekennzeichnet, dass** die von den Druckkompensationsmitteln entwickelte Kraft mit dem von einer Ruheposition oder inaktiven Position ausgehenden Weg des Kolbens (64) kontinuierlich ansteigt.

13. Vorrichtung nach Anspruch 11, **dadurch gekennzeichnet, dass** das Ansteigen der Kraft über den Verschiebeweg der Platte und den Verschleiß der Kupplungsscheibe geringer als 100 % ist.

14. Vorrichtung nach einem der vorherigen Ansprüche, **dadurch gekennzeichnet, dass** sie Mittel zur Erkennung der Verschiebung des Kolbens (64) des Zylinders (48) umfasst, wobei diese Erkennungsmittel induktiv arbeiten und eine von dem Zylinder getragene Spule (194), ein vom Kolben getragenes Induktionselement (196), sowie Mittel zum Messen eines in der Spule fließenden elektrischen Stroms umfassen.

15. Vorrichtung nach einem der vorherigen Ansprüche, **dadurch gekennzeichnet, dass** der Zylinder (48) ringförmig ausgebildet ist und zwei zylindrische koaxiale Wände mit unterschiedlichen Durchmessern umfasst, die sich um die getriebene Welle (38) erstrecken und zwischen denen der Kolben (64) montiert ist, welcher auf der inneren zylindrischen Wand des Zylinders verschieblich geführt ist.

16. Vorrichtung nach Anspruch 15, **dadurch gekennzeichnet, dass** der Kolben durch ein Anbauelement (130) axial verlängert ist, welches auf der inneren zylindrischen Wand des Zylinders geführt ist und Dichtungen (134, 190, 192) aufweist, die von dem Anbauelement getragen oder zwischen diesen und dem Kolben montiert sind.

17. Vorrichtung nach Anspruch 16, **dadurch gekennzeichnet, dass** die Dichtungen (134) U-förmige Dichtungen oder Lippendichtungen sind.

18. Vorrichtung nach einem der vorherigen Ansprüche, **dadurch gekennzeichnet, dass** ein einen axialen Anschlag zur Kraftaufnahme bildendes Lager (112) auf dem Zylinder (48) zwischen diesem und dem Kupplungsdeckel (54) montiert ist.

19. Vorrichtung nach Anspruch 18, **dadurch gekennzeichnet, dass** der an dem Lager (112) anliegende Teil (114) des Deckels (54) zylindrisch mit Elastizitäts-Längsschlitzen ausgebildet ist.

20. Vorrichtung nach einem der vorherigen Ansprüche, **dadurch gekennzeichnet, dass** sie zwei Kupplungen (E1, E2) umfasst, welche parallel zueinander zwischen einem rotatorisch von der Motorwelle angetriebenen Schwungrad (14) und zwei koaxialen getriebenen Wellen (38, 90), die die Eingangswellen eines automatisierten Getriebes bilden, montiert sind, wobei die beiden Kupplungen gemäß der vorgenannten Art ausgeführt sind und von zwei durch Druck einer Flüssigkeit gesteuerten Hydraulikzylindern (48, 106) betätigt werden, wobei die Vorrichtung Druck-Kompensationsmittel der vorgenannten Art umfasst, welche jeder Kupplung und jedem Betätigungszylinder zugeordnet sind.

21. Vorrichtung nach Anspruch 20, **dadurch gekennzeichnet, dass** das Schwungrad (14) ein flexibles Schwungrad ist.

22. Vorrichtung nach Anspruch 20, **dadurch gekennzeichnet, dass** das Schwungrad das Sekundärschwungrad eines Zweimassendämpfungsschwungrades ist, dessen Primärschwungrad fest mit der Motorwelle (10) verbunden ist.

23. Vorrichtung nach Anspruch 22, **dadurch gekennzeichnet, dass** das Primärschwungrad (14) ein flexibles Schwungrad ist.

24. Vorrichtung nach einem der Ansprüche 20 bis 23, **dadurch gekennzeichnet, dass** die zwei Hydraulikzylinder (48, 106) koaxial und einer im Inneren des anderen um die getriebenen Wellen herum angeordnet sind.

25. Vorrichtung nach Anspruch 24, **dadurch gekennzeichnet, dass** die beiden Zylinder (48, 106) eine einheitliche Gruppe bilden, welche schwimmend oder zentriert an einem Gehäuse des Getriebes montiert ist.

26. Vorrichtung nach einem der Ansprüche 1 bis 25, **dadurch gekennzeichnet, dass** mindestens ein Zylinder (48, 106) durch axiales Stecken mit den Mitteln zur Einspeisung der unter Druck stehenden Hydraulikflüssigkeit verbunden ist, welche in das Gehäuse (108) eines Getriebes eingebracht sind.

27. Vorrichtung nach einem der Ansprüche 20 bis 23, **dadurch gekennzeichnet, dass** die zwei Zylinder einen Zylinder (220) umfassen, welcher axial von den getriebenen Wellen (38, 90) durchquert wird und einen ringförmigen Bügel (218) trägt, der einen anderen Zylinder (216) parallel zum ersten Zylinder (201) sowie eine über Kugelgelenkmittel mit dem ringförmigen Bügel (218) verbundene Gabel (224) trägt, wobei diese Gabel dem Kolben des genannten anderen Zylinders (216) zugeordnet ist und auf die Betätigungsmittel einer der beiden Kupplungen einwirkt.

28. Vorrichtung nach einem der Ansprüche 20 bis 27, **dadurch gekennzeichnet, dass** die zwei Kupplungen und ihre Betätigungsmittel eine einheitliche Gruppe bilden, die durch Schrauben (240) an einem fest mit der Motorwelle (10) verbundenen flexiblen Schwungrad (14) befestigt ist, wobei die Köpfe dieser Schraube auf der Seite der Motorwelle (10) angeordnet und von dieser Seite betätigbar sind.
